# EUROPÄISCHE PATENTSCHRIFT

(11) **EP 4 530 158 B1**
(45) Veröffentlichungstag und Bekanntmachung des Hinweises auf die Patenterteilung: **08.10.2025**
(21) Anmeldenummer: 24202017.0
(22) Anmeldetag: 23.09.2024
(51) Int. Cl.: B62D 5/00, B62D 15/02

(54) **STEER-BY-WIRE-LENKSYSTEM, KRAFTFAHRZEUG UND VERFAHREN ZUM BESTIMMEN EINES ABSOLUTEN LENKWINKELS**
STEER-BY-WIRE STEERING SYSTEM, MOTOR VEHICLE AND METHOD FOR DETERMINING AN ABSOLUTE STEERING ANGLE
SYSTÈME DE DIRECTION À COMMANDE ÉLECTRIQUE, VÉHICULE AUTOMOBILE ET PROCÉDÉ DE DÉTERMINATION D'UN ANGLE DE DIRECTION ABSOLU

(30) Priorität: 29.09.2023 BE 202305804
(43) Veröffentlichungstag der Anmeldung: 02.04.2025
(73) Patentinhaber: thyssenkrupp Presta Aktiengesellschaft, 9492 Eschen (LI); thyssenkrupp AG, 45143 Essen (DE)
(72) Erfinder: Arányi, Miklós, 9450 Altstätten (CH); Szepessy, Imre, 9493 Mauren (LI)
(74) Vertreter: thyssenkrupp Intellectual Property GmbH

(56) Entgegenhaltungen:
- DE-A1- 102009 017 054
- DE-B4- 102009 039 764

## Beschreibung

Die Erfindung betrifft ein Steer-by-Wire-Lenksystem für ein Kraftfahrzeug, ein Kraftfahrzeug und ein Verfahren zum Bestimmen eines absoluten Lenkwinkels in einem Steer-by-Wire-Lenksystem für ein Kraftfahrzeug.

Bei einem Steer-by-Wire-Lenksystem sind die gelenkten Räder und das Lenkrad nicht mechanisch, sondern elektrisch gekoppelt. Die gelenkten Räder werden durch Lenksignale gesteuert. Dabei wird die jeweilige Lenkradstellung von einem Lenkwinkelsensor erfasst. Das entsprechende Lenksignal bewirkt, dass ein Lenksteller die Stellung der gelenkten Räder ändert. Um trotz der fehlenden mechanischen Verbindung zwischen Lenkrad und gelenkten Rädern ein realistisches Lenkgefühl zu erzeugen, kann ein Steer-by-Wire-Lenksystem einen Feedback-Aktuator aufweisen, der einen angemessenen Widerstand beim Lenkbewegungen erzeugt.

Die korrekte Funktionsweise eines Steer-by-Wire-Lenksystems setzt dabei die Bestimmung des absoluten Lenkwinkels voraus. Unter dem absoluten Lenkwinkel wird hierbei der Winkel des Lenkrads bzw. der damit verbundenen Lenkwelle über mehrere Umdrehungen hinweg verstanden. Im Gegensatz zu einem relativen Lenkwinkel, der in einem Bereich von ± 360° liegt, hat ein absoluter Lenkwinkel also einen größeren Wertebereich, beispielsweise von bis zu ± 720°.

Zudem ist für Anwendungen im Bereich des (teil-)autonomen Fahrens häufig eine sogenannte "True-Power-On"-Funktionalität des Lenkwinkelsensors erforderlich, die bewirkt, dass der absolute Lenkwinkel bereits beim Systemstart detektiert werden kann, ohne, dass hierzu erst Lenkbewegungen durchgeführt werden müssen.

Aufgrund des hoch sicherheitskritischen Charakters eines Steer-by-Wire-Lenksystems, ist es erforderlich, den absoluten Lenkwinkel zuverlässig und präzise bestimmen zu können. Diesbezügliche Anforderungen an das System werden durch die ASIL-Klassifikation vorgegeben. Die ASIL-Klassifikation (Automotive Safety Integrity Level) ist ein in der ISO 26262 definiertes Schema zur Klassifikation des Risikos, das von Systemkomponenten eines Fahrzeugs ausgeht. Dabei werden typischerweise Komponenten, die im Zusammenhang mit dem Lenksystem des Fahrzeugs stehen, der höchsten Stufe (ASIL-D) zugeordnet.

Im Stand der Technik sind Lösungen bekannt, bei denen die Winkel mehrerer miteinander verbundener, drehbarer Körper gemessen werden, um den absoluten Lenkwinkel zu bestimmen. Beispielsweise ist aus der DE 195 06 938 A1 eine Vorrichtung bekannt, bei welcher der Körper, dessen absoluter Drehwinkel bestimmt werden soll, mit zwei Zahnrädern zusammenwirkt. Die Drehwinkel beider Zahnräder können über zwei entsprechende Drehwinkelsensoren gemessen werden. Aus den so erfassten Drehwinkeln und dem Verhältnis der Zähnezahlen der beiden Zahnräder kann der absolute Drehwinkel des Körpers eindeutig bestimmt werden.

Um eine wie vorstehend beschriebene Vorrichtung zum Messen des absoluten Lenkwinkels in einem Steer-by-Wire-Lenksystem gemäß den in ASIL-D formulierten Anforderungen umzusetzen, sind jedoch zusätzliche Maßnahmen erforderlich. So ergibt sich bereits aus den Anforderungen gemäß ASIL-B, dass jeder der erfassten Drehwinkel nicht durch einen einzigen, sondern durch zwei entsprechende Sensoren erfasst werden, deren Sensorwerte untereinander abgeglichen werden. Somit wären vier Drehwinkelsensoren erforderlich, deren Signale an ein entsprechendes Steuergerät übertragen werden müssen. Dies erhöht die Komplexität der Schnittstelle am Steuergerät und die Auslastung des Kommunikationswegs im Fahrzeug.

Ein weiteres Steer-by-Wire-Lenksystem mit einer Vorrichtung und einem Verfahren zur Bestimmung des absoluten Lenkwinkels ist aus der DE 10 2009 039 764 B4 bekannt.

Der Erfindung liegt die Aufgabe zu Grunde, ein verbessertes Steer-by-Wire-Lenksystem anzugeben, welches dazu ausgebildet ist, den absoluten Lenkwinkel bei Systemstart zu bestimmen. Der Erfindung liegt ferner die Aufgabe zu Grunde, ein entsprechendes Kraftfahrzeug und ein Verfahren zum Bestimmen eines absoluten Lenkwinkels anzugeben.

Unter dem absoluten Lenkwinkel wird hierbei der Winkel des Lenkrads bzw. der damit verbundenen Lenkwelle über mehrere Umdrehungen hinweg verstanden. Im Gegensatz zu einem relativen Lenkwinkel, der in einem Bereich von ± 360° liegt, hat ein absoluter Lenkwinkel also einen größeren Wertebereich, beispielsweise von bis zu ± 720°. Unter der Bestimmung des (absoluten) Lenkwinkels bei Systemstart kann die bereits erwähnt "True-Power-On"-Funktionalität verstanden werden. Hier kann der (absolute) Lenkwinkel bereits beim Systemstart detektiert werden, ohne, dass erst Lenkbewegungen durchgeführt werden müssen.

Erfindungsgemäß wird die Aufgabe im Hinblick auf das Steer-by-Wire-Lenksystem durch den Gegenstand des Anspruchs 1 gelöst. Mit Hinblick auf das Kraftfahrzeug bzw. das Verfahren wird die Aufgabe durch die Gegenstände der Ansprüche 7 und 8 gelöst.

Konkret wird die Aufgabe durch ein Steer-by-Wire-Lenksystem für ein Kraftfahrzeug gelöst. Das Steer-by-Wire-Lenksystem weist eine Lenkradwinkel-Detektionsvorrichtung, einen Feedback-Aktuator und einen Rad-Aktuator auf.

Dabei weist die Lenkradwinkel-Detektionsvorrichtung das Folgende auf:
- ein erstes Zahnrad, das direkt mit einem Lenkrad des Kraftfahrzeugs verbunden ist;
- ein zweites Zahnrad, das mit dem ersten Zahnrad in Eingriff steht; und
- mindestens zwei erste Drehwinkelsensoren, die dazu ausgebildet sind, einen Drehwinkel des zweiten Zahnrads zu detektieren.

Unter "direkt verbunden" wird im Kontext dieser Erfindung verstanden, dass die jeweiligen Körper derart miteinander gekoppelt sind, dass eine Umdrehung des einen Körpers exakt einer Umdrehung des anderen Körpers entspricht.

Der Feedback-Aktuator weist das Folgende auf:
- einen Servomotor mit einer Motorwelle und einem daran befestigten Magneten, wobei die Motorwelle direkt mit dem ersten Zahnrad verbunden ist;
- mindestens zwei zweite Drehwinkelsensoren, die dazu ausgebildet sind, einen Drehwinkel der Motorwelle mittels des Magneten zu detektieren; und
- ein Feedback-Aktuator-Steuergerät, das dazu ausgebildet ist, Sensorsignale der mindestens zwei zweiten Drehwinkelsensoren zu empfangen.

Der Rad-Aktuator weist ein Rad-Aktuator-Steuergerät auf, das mit dem Feedback-Aktuator-Steuergerät kommunikativ verbunden ist und dazu ausgebildet ist, basierend auf Sensorwerten der mindestens zwei ersten Drehwinkelsensoren und den Sensorwerten der mindestens zwei zweiten Drehwinkelsensoren einen absoluten Lenkwinkel zu berechnen. Alternativ oder zusätzlich ist das Feedback-Aktuator-Steuergerät weiter dazu ausgebildet, den absoluten Lenkwinkel zu berechnen.

Das erfindungsgemäße Steer-by-Wire-Lenksystem hat den Vorteil, dass in der Lenkradwinkel-Detektionsvorrichtung kein Paar von Drehwinkelsensoren am ersten Zahnrad erforderlich ist, damit aus dem Drehwinkel des ersten Zahnrads und dem Drehwinkel des zweiten Zahnrads der absolute Lenkwinkel bestimmt werden kann. Stattdessen werden mindestens zwei zweite Drehwinkelsensoren des Feedback-Aktuators genutzt, um einen Drehwinkel der Motorwelle zu bestimmen, die von dem Servomotor des Feedback-Aktuators angetrieben wird. Dabei ist die Motorwelle direkt mit dem ersten Zahnrad verbunden, welches wiederum direkt mit dem Lenkrad verbunden ist. Somit entspricht eine Umdrehung des Lenkrads exakt einer Umdrehung der Motorwelle des Servomotors im Feedback-Aktuator. Das Rad-Aktuator-Steuergerät ist dabei dazu ausgebildet, den absoluten Lenkwinkel auf der Basis der folgenden Drehwinkel zu bestimmen: dem Drehwinkel des zweiten Zahnrads der Lenkradwinkel-Detektionsvorrichtung, der durch die mindestens zwei ersten Drehwinkelsensoren bestimmt wird; und dem Drehwinkel der Motorwelle des Feedback-Aktuators, der von den mindestens zwei zweiten Drehwinkelsensoren bestimmt wird.

Indem Drehwinkelsensoren bzw. Rotor-Positionssensoren des Feedback-Aktuators zur Bestimmung des absoluten Drehwinkels genutzt werden, kann also auf zusätzliche Sensoren im Bereich der Lenkradwinkel-Detektionsvorrichtung verzichtet werden.

Durch die Verwendung redundanter Sensoren zur Erfassung der Drehwinkel (jeweils mindestens zwei Drehwinkelsensoren) ist das erfindungsgemäße Steer-by-Wire-Lenksystem dazu geeignet, die Anforderungen gemäß ASIL-B zu erfüllen. Eine entsprechende Auslegung des Rad-Aktuator-Steuergeräts vorausgesetzt, kann das Steer-by-Wire-Lenksystem die Anforderungen gemäß ASIL-D erfüllen.

Bevorzugte Ausführungsformen des Steer-by-Wire Systems sind in den entsprechenden Unteransprüchen angegeben.

Vorteilhafterweise ist das Feedback-Aktuator-Steuergerät kommunikativ mit dem Rad-Aktuator-Steuergerät verbunden, wobei die Steuergeräte empfangene Sensorinformationen jeweils an das andere Steuergerät übertragen können.

Vorzugsweise ist das Feedback-Aktuator-Steuergerät dazu ausgebildet, den absoluten Lenkwinkel zu berechnen, insbesondere nach dem Nonius-Prinzip (bzw. Vernier-Prinzip) zu berechnen. Hierbei wird der absolute Drehwinkel auf Grundlage der folgenden Größen bestimmt:
- der erfasste Drehwinkels am zweiten Zahnrad;
- der erfasste Drehwinkels der Motorwelle am Servomotor (entspricht dem Drehwinkel des ersten Zahnrads); und
- dem (feststehenden) Übersetzungsverhältnis zwischen dem ersten und dem zweiten Zahnrad.

Auf diese Weise kann der absolute Lenkwinkel mit hoher Präzision berechnet werden. Zudem wird die True-Power-On-Funktionalität gewährleistet, d.h. der absolute Lenkwinkel kann beim Systemstart berechnet werden, ohne, dass Lenkbewegungen zum Einstellen der Sensoren erforderlich sind.

Vorzugsweise kann das Feedback-Aktuator-Steuergerät und/oder das Rad-Aktuator-Steuergerät mindestens zwei, vorzugsweise identische, Steuergeräteeinheiten aufweisen. Bevorzugt werden beide Steuergeräteeinheiten unabhängig voneinander mit Strom versorgt. Auf diese Weise kann das jeweilige Steuergerät zwei redundante Einheiten aufweisen, die funktional identisch sind. Beispielsweise kann dabei eine erste Einheit mit einem ersten der mindestens zwei Drehwinkelsensoren verbunden sein und eine zweite Einheit mit einem zweiten der mindestens zwei Drehwinkelsensoren. Durch einen solchen Aufbau wird die Ausfallsicherheit des Steuergeräts erhöht und es können Anforderungen gemäß ASIL eingehalten werden.

Vorzugsweise sind die mindestens zwei ersten Drehwinkelsensoren mit dem Rad-Aktuator-Steuergerät über einen SENT-Bus kommunikativ verbunden sind. SENT (Single Edge Nibble Transmission) ist eine digitale serielle Schnittstelle. Ein SENT-Bus bietet eine einfache Möglichkeit, Sensordaten zwischen Sensoren und Steuergeräten mit hoher Präzision zu übertragen.

Vorzugsweise ist das Feedback-Aktuator-Steuergerät mit dem Rad-Aktuator-Steuergerät über einen CAN-Bus kommunikativ verbunden. Ein CAN-Bus (Controller-Area-Network) ist ein weit verbreitetes Bussystem zur Kommunikation von Steuergeräten im Fahrzeug. Dies hat den Vorteil, dass die Steuergerätekommunikation des Steer-by-Wire-Lenksystems mittels Standardlösungen implementiert werden kann.

Konkret wird die Aufgabe ferner durch ein Kraftfahrzeug mit einem Steer-by-Wire-Lenksystem wie vorstehend beschrieben gelöst.

Darüber hinaus wird die Aufgabe konkret durch ein Verfahren zum Bestimmen eines absoluten Lenkwinkels in einem Steer-by-Wire-Lenksystem wie vorstehend beschrieben gelöst. Das Verfahren umfasst die folgenden Schritte:
- Erfassen eines ersten Drehwinkels des zweiten Zahnrads;
- Erfassen eines zweiten Drehwinkels der Motorwelle;
- Berechnen eines absoluten Lenkwinkels basierend auf dem ersten Drehwinkel und dem zweiten Drehwinkel.

Somit wird insbesondere ein Verfahren zum Bestimmen eines absoluten Lenkwinkels in einem Steer-by-Wire-Lenksystem für ein Kraftfahrzeug vorgeschlagen,
wobei das Steer-by-Wire-Lenksystem eine Lenkradwinkel-Detektionsvorrichtung, einen Feedback-Aktuator und einen Rad-Aktuator aufweist,
wobei die Lenkradwinkel-Detektionsvorrichtung das Folgende aufweist:
   - ein erstes Zahnrad, das direkt mit einem Lenkrad des Kraftfahrzeugs verbunden ist;
   - ein zweites Zahnrad, das mit dem ersten Zahnrad in Eingriff steht; und
   - mindestens zwei erste Drehwinkelsensoren, die dazu ausgebildet sind, einen Drehwinkel des zweiten Zahnrads zu detektieren,
wobei der Feedback-Aktuator das Folgende aufweist:
   - einen Servomotor mit einer Motorwelle und einem daran befestigten Magneten, wobei die Motorwelle direkt mit dem ersten Zahnrad verbunden ist;
   - mindestens zwei zweite Drehwinkelsensoren, die dazu ausgebildet sind, einen Drehwinkel der Motorwelle mittels des Magneten zu detektieren; und
   - ein Feedback-Aktuator-Steuergerät, das dazu ausgebildet ist, Sensorsignale der mindestens zwei zweiten Drehwinkelsensoren zu empfangen,
wobei der Rad-Aktuator ein Rad-Aktuator-Steuergerät aufweist, das mit dem Feedback-Aktuator-Steuergerät kommunikativ verbunden ist,
und wobei das Verfahren die folgenden Schritte umfasst:
   - Erfassen eines ersten Drehwinkels des zweiten Zahnrads;
   - Erfassen eines zweiten Drehwinkels der Motorwelle;
   - Berechnen eines absoluten Lenkwinkels basierend auf dem ersten Drehwinkel und dem zweiten Drehwinkel.

Die Bestimmung des absoluten Lenkwinkels erfolgt dabei insbesondere mittels des Rad-Aktuator-Steuergeräts. Alternativ oder zusätzlich kann die Bestimmung des absoluten Lenkwinkels vorteilhafterweise mittels des Feedback-Aktuator-Steuergeräts erfolgen.

Die im Zusammenhang mit dem Steer-by-Wire-Lenksystem genannten Vorteile gelten in entsprechender Weise auch für das erfindungsgemäße Kraftfahrzeug und das Verfahren. Die in diesem Zusammenhang beschriebenen Merkmale werden auch im Zusammenhang mit dem Kraftfahrzeug und dem Verfahren offenbart und andersherum. Insbesondere ist das Verfahren dazu geeignet, die Berechnung des absoluten Lenkwinkels in dem Steer-by-Wire-Lenksystem durchzuführen. Andersherum ist das Steer-by-Wire-Lenksystem dazu ausgebildet, die entsprechenden Verfahrensschritte durchzuführen.

Bevorzugte Ausführungsformen des Verfahrens sind in den entsprechenden Unteransprüchen angegeben.

Vorzugsweise erfolgt das Berechnen des absoluten Lenkwinkels nach dem Nonius-Prinzip (bzw. Vernier-Prinzip). Dies bietet den Vorteil, dass der absolute Lenkwinkel mit hoher Präzision berechnet wird. Zudem setzt das Berechnungsverfahren keine Referenz-Lenkbewegungen voraus, sodass eine True-Power-On-Funktionalität umgesetzt werden kann.

Vorzugsweise umfasst das Berechnen des absoluten Lenkwinkels die Addition eines Mittenpositions-Versatzwertes und/oder eines horizontalen Lenkrad-Versatzwertes. Auf diese Weise können zusätzliche Parameter des Lenksystems berücksichtigt werden, was die Präzision des berechneten absoluten Lenkwinkels weiter erhöht.

Die Erfindung wird nachstehend anhand eines Ausführungsbeispiels unter Bezug auf die beigefügten schematischen Figuren mit weiteren Einzelheiten näher erläutert.

Dabei zeigen
- Fig. 1: eine schematische Ansicht eines erfindungsgemäßen Steer-by-Wire-Lenksystems gemäß einem Ausführungsbeispiel;
- Fig. 2: eine schematische Ansicht des erfindungsgemäßen Steer-by-Wire-Lenksystems gemäß einem Ausführungsbeispiel in höherem Detailgrad; und
- Fig. 3: eine schematische Ansicht der Kommunikationsverbindungen in dem erfindungsgemäßen Steer-by-Wire-Lenksystem gemäß einem Ausführungsbeispiel.

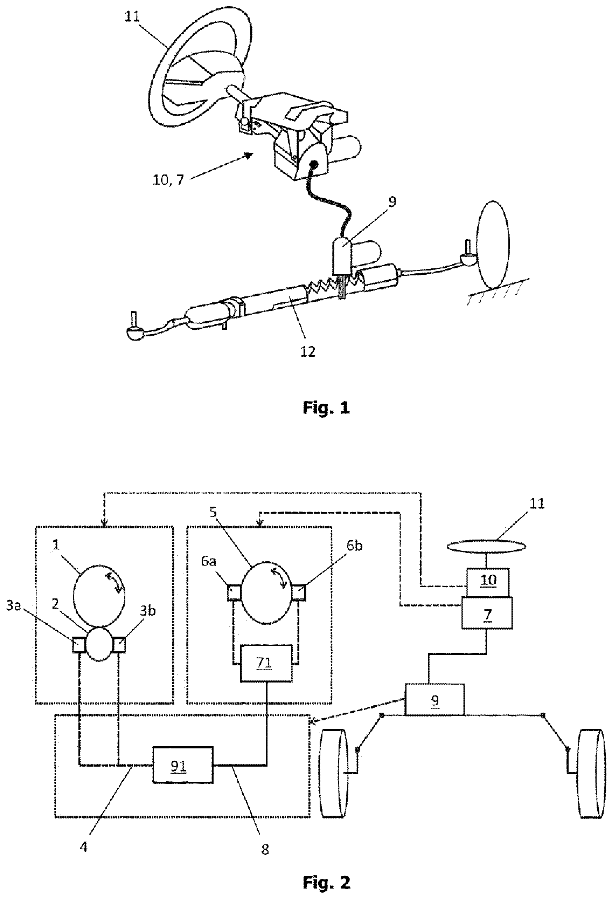

Figur 1 zeigt einige Komponenten eines erfindungsgemäßen Steer-by-Wire-Lenksystems gemäß einem Ausführungsbeispiel. Die Komponenten des Lenksystems werden beschrieben, soweit diese für das Verständnis erforderlich sind.

Das Steer-by-Wire-Lenksystem hat ein Lenkrad 11, das über eine Lenkwelle mit einer Lenkradwinkel-Detektionsvorrichtung 10 und einem Feedback-Aktuator 7 verbunden ist.

Ferner weist das Steer-by-Wire-Lenksystem einen Rad-Aktuator 9 mit einem Steuergerät auf, das kommunikativ mit einem Steuergerät des Feedback-Aktuators 7 verbunden ist und ferner dazu ausgebildet ist, Sensorwerte der Lenkradwinkel-Detektionsvorrichtung 10 zu empfangen.

Das Steuergerät des Rad-Aktuators 9 ist dazu ausgebildet, den absoluten Lenkwinkel, der von einem Fahrer am Lenkrad 11 eingestellt wird, zu berechnen und zur Lenkung des Fahrzeugs die Zahnstange 17 entsprechend anzutreiben.

Die Erfindung ist nicht auf Lenkräder eingeschränkt, sondern allgemein auf Lenkorgane anwendbar, also auch auf andere Lenker, wie Handlebars. Ebenso sind neben dem vorstehend beschriebenen Lenkrad allgemein Lenkorgane umfasst. Die Erfindung ist auch nicht auf die Schnittstelle Mensch-Maschine eingeschränkt, sondern umfasst auch Lenksysteme, die ein autonomes Fahren ermöglichen.

Figur 2 zeigt einige Komponenten des erfindungsgemäßen Steer-by-Wire-Lenksystems gemäß einem Ausführungsbeispiel, insbesondere die Lenkradwinkel-Detektionsvorrichtung 10, den Feedback-Aktuator 7 und den Radaktuator 9 in höherem Detailgrad.

So weist die Lenkradwinkel-Detektionsvorrichtung 10 ein erstes Zahnrad 1 auf, welches direkt mit dem Lenkrad 11 verbunden ist, beispielsweise über eine Lenkwelle. Auf diese Weise entspricht eine Umdrehung des Lenkrads 11 exakt einer Umdrehung des ersten Zahnrads 1. Ferner weist die Lenkradwinkel-Detektionsvorrichtung 10 ein zweites Zahnrad 2 auf, das mit dem ersten Zahnrad 1 im Eingriff steht und eine kleinere Zähnezahl als das erste Zahnrad 1 aufweist. Das erste Zahnrad 1 und das zweite Zahnrad 2 bilden somit ein Getriebe mit festem Übersetzungsverhältnis. An dem zweiten Zahnrad 2 sind zwei Drehwinkelsensoren 3a, 3b angeordnet, die eine Stellung bzw. den Drehwinkel des zweiten Zahnrads 2 messen. Die Drehwinkelsensoren 3a, 3b können beispielsweise magnetbasiert arbeiten.

Der Feedback-Aktuator 7 weist einen Servomotor mit einer Motorwelle 5 auf, welche direkt mit dem ersten Zahnrad 1 verbunden ist. Somit entspricht eine Umdrehung des ersten Zahnrads 1 (bzw. des Lenkrads 11) exakt einer Umdrehung der Motorwelle 5. Mittels eines Magneten (nicht dargestellt), der an der Motorwelle 5 befestigt ist, können die Rotorpositionssensoren bzw. Drehwinkelsensoren 6a, 6b den Drehwinkel der Motorwelle 5 detektieren. Das Feedback-Aktuator-Steuergerät 71 empfängt die Sensorwerte der Drehwinkelsensoren 6a, 6b.

Der Rad-Aktuator 9 weist ein Rad-Aktuator-Steuergerät 91 auf, welches über einen SENT-Bus 4 mit den ersten Drehwinkelsensoren 3a, 3b der Lenkradwinkel-Detektionsvorrichtung 10 verbunden ist, sowie ferner über einen CAN-Bus 8 mit dem Feedback-Aktuator-Steuergerät 71 verbunden ist. Auf diese Weise kann das Radaktuator-Steuergerät 91 die Sensorwerte der Drehwinkelsensoren 3a, 3b und 6a, 6b empfangen und basierend darauf sowie auf dem festen Übersetzungsverhältnis der Zahnräder 1, 2 den absoluten Lenkwinkel berechnen. Vorteilhafterweise kann das Feedback-Aktuator-Steuergerät in entsprechender Weise Sensorwerte der Drehwinkelsensoren 3a, 3b und 6a, 6b empfangen und basierend darauf sowie auf dem festen Übersetzungsverhältnis der Zahnräder 1, 2 den absoluten Lenkwinkel berechnen.

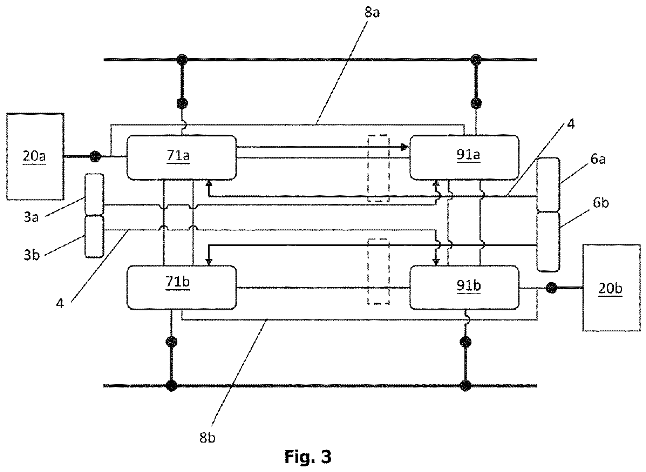

Figur 3 zeigt schematische Ansicht der Kommunikationsverbindungen in einem erfindungsgemäßen Steer-by-Wire-Lenksystem gemäß einem Ausführungsbeispiel. In dem gezeigten Ausführungsbeispiel sind redundante Einheiten, Kommunikationsverbindungen und Stromversorgungseinheiten für die beteiligten Steuergeräte vorgesehen sind.

Konkret wird das Feedback-Aktuator-Steuergerät aus zwei redundanten Einheiten 71a, 71b gebildet. Die Feedback-Aktuator-Steuergeräteeinheit 71a wird von der Stromversorgungseinheit 20a mit Strom versorgt und empfängt die Sensorwerte des ersten Drehwinkelsensors 6a. Die Feedback-Aktuator-Steuergeräteeinheit 71b wird von der Stromversorgungseinheit 20b, die unabhängig von der Stromversorgungseinheit 20a ist, mit Strom versorgt und empfängt die Sensorwerte des ersten Drehwinkelsensors 6b.

Das Rad-Aktuator-Steuergerät wird aus zwei redundanten Einheiten 91a, 91b gebildet. Die Rad-Aktuator-Steuergeräteeinheit 91a wird von der Stromversorgungseinheit 20a mit Strom versorgt und ist über den CAN-Bus 8a mit der Feedback-Aktuator-Steuergeräteeinheit 71a verbunden, um die Sensorwerte des ersten Drehwinkelsensor 6a zu empfangen. Die Rad-Aktuator-Steuergeräteeinheit 91b wird von der Stromversorgungseinheit 20b mit Strom versorgt und ist über den CAN-Bus 8b mit der Feedback-Aktuator-Steuergeräteeinheit 71b verbunden, um die Sensorwerte des ersten Drehwinkelsensors 6b zu empfangen.

Durch die redundante Auslegung der Steuergeräteeinheiten, Sensoren und Kommunikationswege sowie der unabhängigen Stromversorgungen biete das Steer-by-Wire-Lenksystem eine erhöhte Ausfallsicherheit, insbesondere im Hinblick auf die Anforderungen gemäß ASIL-B bzw. ASIL-D.

### Bezugszeichenliste

- 1: erstes Zahnrad
- 2: zweites Zahnrad
- 3a, 3b: erste Drehwinkelsensoren
- 4: SENT-Bus
- 5: Motorwelle
- 6a, 6b: zweite Drehwinkelsensoren
- 7: Feedback-Aktuator
- 8: CAN-Bus
- 9: Rad-Aktuator
- 10: Lenkradwinkel-Detektionsvorrichtung
- 11: Lenkrad
- 12: Zahnstange
- 20a, 20b: Stromversorgungen
- 71: Feedback-Aktuator-Steuergerät
- 71a, 71b: Feedback-Aktuator-Steuergeräteeinheiten
- 91: Rad-Aktuator-Steuergerät
- 91a, 91b: Rad-Aktuator-Steuergeräteeinheiten

## Patentansprüche

1. Steer-by-Wire-Lenksystem für ein Kraftfahrzeug,
wobei das Steer-by-Wire-Lenksystem eine Lenkradwinkel-Detektionsvorrichtung (10), einen Feedback-Aktuator (7) und einen Rad-Aktuator (9) aufweist,
**dadurch gekennzeichnet, dass** die Lenkradwinkel-Detektionsvorrichtung (10) das Folgende aufweist:
- ein erstes Zahnrad (1), das direkt mit einem Lenkrad (11) des Kraftfahrzeugs verbunden ist;
- ein zweites Zahnrad (2), das mit dem ersten Zahnrad (1) in Eingriff steht; und
- mindestens zwei erste Drehwinkelsensoren (3a, 3b), die dazu ausgebildet sind, einen Drehwinkel des zweiten Zahnrads (2) zu detektieren,
wobei der Feedback-Aktuator (7) das Folgende aufweist:
- einen Servomotor mit einer Motorwelle (5) und einem daran befestigten Magneten, wobei die Motorwelle (5) direkt mit dem ersten Zahnrad (1) verbunden ist;
- mindestens zwei zweite Drehwinkelsensoren (6a, 6b), die dazu ausgebildet sind, einen Drehwinkel der Motorwelle (5) mittels des Magneten zu detektieren; und
- ein Feedback-Aktuator-Steuergerät (71), das dazu ausgebildet ist, Sensorsignale der mindestens zwei zweiten Drehwinkelsensoren (6a, 6b) zu empfangen,
wobei der Rad-Aktuator (9) ein Rad-Aktuator-Steuergerät (91) aufweist, das mit dem Feedback-Aktuator-Steuergerät (71) kommunikativ verbunden ist und dazu ausgebildet ist, basierend auf Sensorwerten der mindestens zwei ersten Drehwinkelsensoren (3a, 3b) und den Sensorwerten der mindestens zwei zweiten Drehwinkelsensoren (6a, 6b) einen absoluten Lenkwinkel zu berechnen.

2. Steer-by-Wire-Lenksystem nach Anspruch 1,
**dadurch gekennzeichnet, dass**
das Feedback-Aktuator-Steuergerät (71) dazu ausgebildet ist, den absoluten Lenkwinkel zu berechnen.

3. Steer-by-Wire-Lenksystem nach Anspruch 2,
**dadurch gekennzeichnet, dass**
das Feedback-Aktuator-Steuergerät (71) dazu ausgebildet ist, den absoluten Lenkwinkel nach dem Nonius-Prinzip zu berechnen.

4. Steer-by-Wire-Lenksystem nach einem der vorhergehenden Ansprüche,
**dadurch gekennzeichnet, dass**
das Feedback-Aktuator-Steuergerät (71) und/oder das Rad-Aktuator-Steuergerät (91) mindestens zwei, vorzugsweise identische, Steuergeräteeinheiten aufweist, die vorzugsweise unabhängig mit Strom versorgt werden.

5. Steer-by-Wire-Lenksystem nach einem der vorherigen Ansprüche,
**dadurch gekennzeichnet, dass**
die mindestens zwei ersten Drehwinkelsensoren (3a, 3b) mit dem Rad-Aktuator-Steuergerät (91) über einen SENT-Bus (4) kommunikativ verbunden sind.

6. Steer-by-Wire-Lenksystem nach einem der vorherigen Ansprüche,
**dadurch gekennzeichnet, dass**
das Feedback-Aktuator-Steuergerät (71) mit dem Rad-Aktuator-Steuergerät (91) über einen CAN-Bus (8) kommunikativ verbunden ist.

7. Kraftfahrzeug mit Steer-by-Wire-Lenksystem nach einem der Ansprüche 1 bis 6.

8. Verfahren zum Bestimmen eines absoluten Lenkwinkels in einem Steer-by-Wire-Lenksystem für ein Kraftfahrzeug,
wobei das Steer-by-Wire-Lenksystem eine Lenkradwinkel-Detektionsvorrichtung (10), einen Feedback-Aktuator (7) und einen Rad-Aktuator (9) aufweist,
**dadurch gekennzeichnet, dass** die Lenkradwinkel-Detektionsvorrichtung (10) das Folgende aufweist:
- ein erstes Zahnrad (1), das direkt mit einem Lenkrad (11) des Kraftfahrzeugs verbunden ist;
- ein zweites Zahnrad (2), das mit dem ersten Zahnrad (1) in Eingriff steht; und
- mindestens zwei erste Drehwinkelsensoren (3a, 3b), die dazu ausgebildet sind, einen Drehwinkel des zweiten Zahnrads (2) zu detektieren,
wobei der Feedback-Aktuator (7) das Folgende aufweist:
- einen Servomotor mit einer Motorwelle (5) und einem daran befestigten Magneten, wobei die Motorwelle (5) direkt mit dem ersten Zahnrad (1) verbunden ist;
- mindestens zwei zweite Drehwinkelsensoren (6a, 6b), die dazu ausgebildet sind, einen Drehwinkel der Motorwelle (5) mittels des Magneten zu detektieren; und
- ein Feedback-Aktuator-Steuergerät (71), das dazu ausgebildet ist, Sensorsignale der mindestens zwei zweiten Drehwinkelsensoren (6a, 6b) zu empfangen,
wobei der Rad-Aktuator (9) ein Rad-Aktuator-Steuergerät (91) aufweist, das mit dem Feedback-Aktuator-Steuergerät (71) kommunikativ verbunden ist,
und wobei das Verfahren die folgenden Schritte umfasst:
- Erfassen eines ersten Drehwinkels des zweiten Zahnrads (2);
- Erfassen eines zweiten Drehwinkels der Motorwelle (5);
- Berechnen eines absoluten Lenkwinkels basierend auf dem ersten Drehwinkel und dem zweiten Drehwinkel.

9. Verfahren nach Anspruch 8,
**dadurch gekennzeichnet, dass**
das Berechnen des absoluten Lenkwinkels nach dem Nonius-Prinzip erfolgt.

10. Verfahren nach Anspruch 8 oder 9,
wobei das Berechnen des absoluten Lenkwinkels die Addition eines Mittenpositions-Versatzwertes und/oder eines horizontalen Lenkrad-Versatzwertes umfasst.

## Claims

1. Steer-by-wire steering system for a motor vehicle, wherein the steer-by-wire steering system has a steering wheel angle detection apparatus (10), a feedback actuator (7) and a wheel actuator (9), **characterized in that** the steering wheel angle detection apparatus (10) has the following:
- a first gearwheel (1) which is directly connected to a steering wheel (11) of the motor vehicle;
- a second gearwheel (2) which is in engagement with the first gearwheel (1); and
- at least two first rotational angle sensors (3a, 3b) which are designed to detect a rotational angle of the second gearwheel (2),
wherein the feedback actuator (7) has the following:
- a servomotor with a motor shaft (5) and a magnet fastened thereto, wherein the motor shaft (5) is directly connected to the first gearwheel (1);
- at least two second rotational angle sensors (6a, 6b) which are designed to detect a rotational angle of the motor shaft (5) by means of the magnet; and
- a feedback actuator control device (71) which is designed to receive sensor signals from the at least two second rotational angle sensors (6a, 6b),
wherein the wheel actuator (9) has a wheel actuator control device (91) which is communicatively connected to the feedback actuator control device (71) and is designed to calculate an absolute steering angle on the basis of sensor values from the at least two first rotational angle sensors (3a, 3b) and the sensor values from the at least two second rotational angle sensors (6a, 6b).

2. Steer-by-wire steering system according to Claim **1, characterized in that**
the feedback actuator control device (71) is designed to calculate the absolute steering angle.

3. Steer-by-wire steering system according to Claim **2, characterized in that**
the feedback actuator control device (71) is designed to calculate the absolute steering angle according to the Nonius principle.

4. Steer-by-wire steering system according to one of the preceding claims,
**characterized in that**
the feedback actuator control device (71) and/or the wheel actuator control device (91) has/have at least two, preferably identical, control device units which are preferably independently supplied with power.

5. Steer-by-wire steering system according to one of the preceding claims,
**characterized in that**
the at least two first rotational angle sensors (3a, 3b) are communicatively connected to the wheel actuator control device (91) via a SENT bus (4).

6. Steer-by-wire steering system according to one of the preceding claims,
**characterized in that**
the feedback actuator control device (71) is communicatively connected to the wheel actuator control device (91) via a CAN bus (8).

7. Motor vehicle having a steer-by-wire steering system according to one of Claims 1 to **6.**

8. Method for determining an absolute steering angle in a steer-by-wire steering system for a motor vehicle,
wherein the steer-by-wire steering system has a steering wheel angle detection apparatus (10), a feedback actuator (7) and a wheel actuator (9),
**characterized in that** the steering wheel angle detection apparatus (10) has the following:
- a first gearwheel (1) which is directly connected to a steering wheel (11) of the motor vehicle;
- a second gearwheel (2) which is in engagement with the first gearwheel (1); and
- at least two first rotational angle sensors (3a, 3b) which are designed to detect a rotational angle of the second gearwheel (2),
wherein the feedback actuator (7) has the following:
- a servomotor with a motor shaft (5) and a magnet fastened thereto, wherein the motor shaft (5) is directly connected to the first gearwheel (1);
- at least two second rotational angle sensors (6a, 6b) which are designed to detect a rotational angle of the motor shaft (5) by means of the magnet; and
- a feedback actuator control device (71) which is designed to receive sensor signals from the at least two second rotational angle sensors (6a, 6b),
wherein the wheel actuator (9) has a wheel actuator control device (91) which is communicatively connected to the feedback actuator control device (71),
and wherein
the method comprises the following steps:
- capturing a first rotational angle of the second gearwheel (2);
- capturing a second rotational angle of the motor shaft (5);
- calculating an absolute steering angle on the basis of the first rotational angle and the second rotational angle.

9. Method according to Claim 8,
**characterized in that**
the absolute steering angle is calculated according to the Nonius principle.

10. Method according to Claim 8 or 9,
wherein the calculation of the absolute steering angle comprises the addition of a centre position offset value and/or a horizontal steering wheel offset value.

## Revendications

1. Système de direction à commande électrique pour un véhicule automobile,
dans lequel le système de direction à commande électrique comprend un dispositif de détection de l'angle de braquage du volant (10), un actionneur de rétroaction (7) et un actionneur de roue (9), **caractérisé en ce que** le dispositif de détection de l'angle de braquage du volant (10) comprend:
- une première roue dentée (1) qui est directement reliée à un volant (11) du véhicule à moteur;
- une deuxième roue dentée (2) qui est en prise avec la première roue dentée (1); et
- au moins deux premiers capteurs d'angle de rotation (3a, 3b) qui sont conçus pour détecter un angle de rotation de la deuxième roue dentée (2),
dans lequel l'actionneur de rétroaction (7) comprend les éléments suivants:
- un servomoteur avec un arbre moteur (5) et un aimant fixé à celui-ci, l'arbre moteur (5) étant directement relié à la première roue dentée (1);
- au moins deux seconds capteurs d'angle de rotation (6a, 6b) qui sont conçus pour détecter un angle de rotation de l'arbre moteur (5) au moyen de l'aimant; et
- un dispositif de commande de l'actionneur de rétroaction (71) qui est conçu pour recevoir des signaux de capteur provenant des au moins deux seconds capteurs d'angle de rotation (6a, 6b),
dans lequel l'actionneur de roue (9) comporte un dispositif de commande d'actionneur de roue (91) qui est en communication avec le dispositif de commande de l'actionneur de rétroaction (71) et qui est conçu pour calculer un angle de braquage absolu sur la base des valeurs de capteur provenant des au moins deux premiers capteurs d'angle de rotation (3a, 3b) et des valeurs de capteur provenant des au moins deux seconds capteurs d'angle de rotation (6a, 6b).

2. Système de direction à commande électrique selon la revendication **1,**
**caractérisé en ce que**
le dispositif de commande de l'actionneur de rétroaction (71) est conçu pour calculer l'angle de braquage absolu.

3. Système de direction à commande électrique selon la revendication **2,**
**caractérisé en ce que**
le dispositif de commande de l'actionneur de rétroaction (71) est conçu pour calculer l'angle de braquage absolu selon le principe du Nonius.

4. Système de direction à commande électrique selon l'une des revendications précédentes,
**caractérisé en ce que**
le dispositif de commande de l'actionneur de rétroaction (71) et/ou le dispositif de commande de l'actionneur de roue (91) comporte(nt) au moins deux unités de commande, de préférence identiques, qui sont de préférence alimentées en énergie de manière indépendante.

5. Système de direction à commande électrique selon l'une des revendications précédentes,
**caractérisé en ce que**
les au moins deux premiers capteurs d'angle de rotation (3a, 3b) sont en communication avec le dispositif de commande d'actionneur de roue (91) via un bus SENT (4).

6. Système de direction à commande électrique selon l'une des revendications précédentes,
**caractérisé en ce que**
le dispositif de commande de l'actionneur de rétroaction (71) est en communication avec le dispositif de commande de l'actionneur de roue (91) via un bus CAN (8).

7. Véhicule automobile équipé d'un système de direction à commande électrique selon l'une des revendications 1 à **6.**

8. Procédé pour déterminer un angle de braquage absolu dans un système de direction à commande électrique pour un véhicule automobile,
dans lequel le système de direction à commande électrique comporte un dispositif de détection de l'angle de braquage du volant (10), un actionneur de rétroaction (7) et un actionneur de roue (9),
**caractérisé en ce que** le dispositif de détection de l'angle de braquage du volant (10) comprend:
- une première roue dentée (1) qui est directement reliée à un volant (11) du véhicule à moteur;
- une deuxième roue dentée (2) qui est en prise avec la première roue dentée (1); et
- au moins deux premiers capteurs d'angle de rotation (3a, 3b) qui sont conçus pour détecter un angle de rotation de la deuxième roue dentée (2),
dans lequel l'actionneur de rétroaction (7) comprend les éléments suivants:
- un servomoteur avec un arbre moteur (5) et un aimant fixé à celui-ci, l'arbre moteur (5) étant directement relié à la première roue dentée (1);
- au moins deux seconds capteurs d'angle de rotation (6a, 6b) qui sont conçus pour détecter un angle de rotation de l'arbre moteur (5) au moyen de l'aimant; et
- un dispositif de commande de l'actionneur de rétroaction (71) qui est conçu pour recevoir des signaux de capteur provenant des au moins deux seconds capteurs d'angle de rotation (6a, 6b),
dans lequel l'actionneur de roue (9) comporte un dispositif de commande d'actionneur de roue (91) qui est en communication avec le dispositif de commande de l'actionneur de rétroaction (71),
et dans lequel
le procédé comprend les étapes suivantes:
- la détection d'un premier angle de rotation de la deuxième roue dentée (2);
- la détection d'un deuxième angle de rotation de l'arbre moteur (5);
- le calcul un angle de braquage absolu sur la base du premier angle de rotation et du deuxième angle de rotation.

9. Procédé selon la revendication 8,
**caractérisé en ce que**
l'angle de braquage absolu est calculé selon le principe du Nonius.

10. Procédé selon la revendication 8 ou 9,
dans lequel le calcul de l'angle de braquage absolu comprend l'ajout d'une valeur de décalage de la position centrale et/ou d'une valeur de décalage horizontal du volant.
